# EUROPÄISCHE PATENTANMELDUNG

(11) **EP 1 643 360 A2**
(43) Veröffentlichungstag der Anmeldung: **05.04.2006**
(21) Anmeldenummer: 05108637.9
(22) Anmeldetag: 20.09.2005
(51) Int. Cl.: G06F 9/445

(54) **Ersetzen eines Datensatzes in einem Speicher**

(30) Priorität: 29.09.2004 DE 102004047192
(71) Anmelder: ROBERT BOSCH GMBH, 70442 Stuttgart (DE)
(72) Erfinder: Mittag, Andreas, 71706, Markgroeningen (DE); Grosshans, Peter, 56009, Bangalore (IN); Lentz, Dirk, 70825, Korntal-Muenchingen (DE)

(57) **Zusammenfassung**

Die Erfindung betrifft ein Verfahren zum Ersetzen eines in einem Speicher (1, 8) eines programmgesteuerten Geräts gespeicherten, für die Herstellung der Betriebsbereitschaft des Geräts benötigten ersten Datensatzes (3) durch einen zweiten Datensatz (6, 6'), sowie ein programmgesteuertes Gerät mit einem Speicher (1, 8) zum Ausführen des Verfahrens. Dazu wird zunächst die Betriebsbereitschaft des Geräts mit dem ersten Datensatz (3) hergestellt. Anschließend wird der zweite Datensatz (6, 6') in einen von dem ersten Datensatz (3) getrennten Bereich (2, 5, 11) des Speichers (1, 8) geladen. Schließlich wird der erste Datensatz (3, 3') in einen nicht ausführbaren Zustand und der zweite Datensatz (6, 6') in einen ausführbaren Zustand versetzt.

## Beschreibung

Die Erfindung betrifft ein Verfahren zum Ersetzen eines in einem Speicher eines programmgesteuerten Geräts gespeicherten, für die Herstellung der Betriebsbereitschaft des Geräts benötigten ersten Datensatzes durch einen zweiten Datensatz, sowie ein programmgesteuertes Gerät mit einem Speicher zum Ausführen des Verfahrens.

### Stand der Technik

Programmgesteuerte Geräte umfassen in der Regel Speicher, in denen neben Anwendungsprogrammdaten, die zur Steuerung des Gerätes benötigt werden, auch ein Datensatz enthalten ist, der für die Herstellung der Betriebsbereitschaft des Geräts benötigt wird. Zu diesem Datensatz gehören häufig auch Daten in Form von Programmanweisungen oder Parameterwerten, die das programmgesteuerte Gerät benötigt, um beliebige Daten, insbesondere Programmanweisungen, in dem Speicher ändern zu können. Schließlich stellt der Datensatz elementare Routinen bereit, die während des Betriebs des programmgesteuerten Geräts mit den Anwendungsprogrammdaten wechselwirken und eine Schnittstelle zwischen der Hardware des programmgesteuerten Geräts und der Software der Anwendungsprogrammdaten darstellen.

Von Zeit zu Zeit ist es notwendig, die im Speicher abgelegten Anwendungsprogrammdaten zu ändern oder durch neue Anwendungsprogrammdaten zu ersetzen. Beispielsweise können die Anwendungsprogrammdaten Betriebs- oder Steuerprogramme für das programmgesteuerte Gerät umfassen, die gegen neuere Versionen ausgetauscht werden müssen, oder aber das programmgesteuerte Gerät muss auf geänderte Betriebsbedingungen eingestellt werden, weil sich z. B. die Umgebungsbedingungen für das Gerät oder Peripheriegeräte, mit denen das programmgesteuerte Gerät interagiert, geändert haben.

Eine Änderung von Daten im Speicher, die den Datensatz selbst nicht betrifft, ist in der Ausführung im Allgemeinen unproblematisch, da der Datensatz jederzeit vollständig zur Verfügung steht. Wenn eine solche Änderung scheitert, z. B. aufgrund eines Stromausfalls oder einer Unterbrechung einer Leitung, auf der neue Daten an das Gerät übertragen werden, so bleibt der Datensatz auch nach dem Scheitern verfügbar. Im Falle eines Stromausfalles kann der Datensatz die Betriebsbereitschaft des programmgesteuerten Geräts jederzeit wieder herstellen, bei Unterbrechung der Leitung kann jederzeit ein erneuter Änderungsversuch unternommen werden, bis die Änderung schließlich erfolgreich ist. Wenn die Änderung aber den Datensatz selbst mit betrifft, so besteht die Gefahr, dass dieser nach einem gescheiterten Änderungsversuch nicht mehr vollständig vorliegt. Der unvollständige Datensatz kann mithin seine Aufgaben, für die Herstellung der Betriebsbereitschaft des programmgesteuerten Geräts zu sorgen und bei der Änderung von Daten in dem Speicher mitzuwirken, nicht mehr erfüllen. Sofern der Versuch, den Datensatz zu ändern, aufgrund eines Stromausfalles scheitert, kann das programmgesteuerte Gerät daher nicht mehr betriebsbereit gemacht werden und ist als Ganzes unbrauchbar. Wenn der Versuch, den Datensatz zu ändern, wegen einer defekten datenübertragenden Leitung scheitert, können keine der im Speicher gespeicherten Daten mehr geändert werden, insbesondere kann der beschädigte Datensatz nicht mehr durch einen neuen Datensatz ersetzt werden. Schlimmstenfalls, wenn auch die Anwendungsprogrammdaten fehlerhaft sind oder die Wechselwirkung zwischen Datensatz und Anwendungsprogrammdaten beeinträchtigt ist, wird das programmgesteuerte Gerät sofort unbrauchbar, auf jeden Fall wird es aber spätestens mit Ausschalten als Ganzes unbrauchbar, weil bei Wiedereinschalten dessen Betriebsbereitschaft nicht mehr hergestellt werden kann.

Weil man aus diesen Gründen bei bekannten Verfahren zum Ändern von Daten in einem Speicher gezwungen ist, den darin enthaltenen alten Datensatz unangetastet zu lassen, muss er bei jeder Änderung der Anwendungsprogrammdaten berücksichtigt werden, damit eine reibungslose Wechselwirkung zwischen dem alten Datensatz und den neuen, geänderten Anwendungsprogrammdaten gewährleistet ist. Eine Möglichkeit hierfür besteht darin, die neuen Anwendungsprogrammdaten schon bei deren Programmierung auf eine Zusammenarbeit mit dem alten Datensatz hin auszulegen, was aber häufig dazu führt, dass aufgrund veralteter Routinen des alten Datensatzes eine beabsichtigte Aktualisierung und Verbesserung der Anwendungsprogrammdaten oftmals gar nicht möglich ist. Eine andere Möglichkeit besteht in der Bereitstellung von Sprung- oder Zwischentabellen als Schnittstellen zwischen dem Datensatz und den Anwendungsprogrammdaten, denen die Anwendungsprogrammdaten die für sie wichtigen Informationen entnehmen und in die sie Informationen für Routinen des Datensatzes schreiben können, so dass die Programmierung der Anwendungsprogrammdaten vom alten Datensatz unabhängig erfolgen kann. Solche Sprung- und Zwischentabellen erfordern aber zusätzlichen Speicherplatz im Speicher und mindern daher die nutzbare Speicherkapazität desselben. Außerdem wird die Verarbeitungsgeschwindigkeit des programmgesteuerten Geräts durch sie herabgesetzt, weil das Lesen aus den bzw. das Schreiben in die Zwischentabellen zeitraubend ist. In Anbetracht dessen wäre eine direkte Wechselwirkung zwischen Anwendungsprogrammdaten und Datensatz wünschenswert.

Weil der einmal in den Speicher eingegebene Datensatz mit bekannten Verfahren zum Ersetzen von Daten in einem Speicher aus den oben genannten Gründen nicht mehr geändert werden kann, kann er insbesondere auch nicht gegen neuere und verbesserte Versionen mit verbesserten Routinen ausgetauscht werden, insbesondere auch nicht gegen solche Versionen, die an die neuen Anwendungsprogrammdaten angepasst sind. Es ist aus all diesen Gründen ganz allgemein ein Verfahren wünschenswert, das ein gefahrloses Ersetzen eines Datensatzes in einem Speicher gegen einen neuen Datensatz gestattet.

### Vorteile der Erfindung

Durch die vorliegende Erfindung, wie in den Ansprüchen 1 und 12 definiert, wird ein Verfahren zum Ersetzen eines in einem Speicher eines programmgesteuerten Geräts gespeicherten ersten Datensatzes durch einen zweiten Datensatz sowie ein programmgesteuertes Gerät zur Ausführung dieses Verfahrens geschaffen, bei denen die Gefahr, dass das programmgesteuerte Gerät bei unvorhergesehenen Unterbrechungen des Änderungsvorgangs beeinträchtigt wird, minimiert ist.

Gemäß der Erfindung wird der zweite Datensatz im Schritt (b) des Anspruchs 1 in einen von dem ersten Datensatz getrennten Bereich des Speichers geladen. Anschließend wird der erste Datensatz im Schritt (c) des Anspruchs 1 in einen nicht ausführbaren Zustand und der zweite Datensatz in einen ausführbaren Zustand versetzt. Das bedeutet, dass der erste Datensatz während des Ladens des zweiten Datensatzes unangetastet bleibt und deshalb auch bei Eintreten einer Unterbrechung des Ladevorganges stets vollständig und funktionsbereit vorliegt. Erst nachdem der zweite Datensatz vollständig geladen worden ist, wird der erste Datensatz in den nicht ausführbaren Zustand versetzt, woraufhin nunmehr der in den ausführbaren Zustand versetzte zweite Datensatz ab diesem Zeitpunkt zum Ändern von Daten in dem Speicher verwendet wird.

Der zweite Datensatz lässt sich nun Dank der Erfindung zusammen mit neuen Anwendungsprogrammdaten als zusammenhängender Datenblock auslegen, was die Verarbeitungsgeschwindigkeit des programmgesteuerten Geräts erhöht. Insbesondere kann dadurch auf Sprung- oder Zwischentabellen als Schnittstelle zwischen dem Datensatz und eventuellen Anwendungsprogrammen, die auf diesen Datensatz zurückgreifen, verzichtet werden, wodurch anderweitig nutzbarer Speicherplatz im Speicher geschaffen wird. Weil der Datensatz in einem solchen Fall mit den Anwendungsprogrammdaten direkt und ohne Schnittstellen in Form von Sprung- und Zwischentabellen wechselwirkt, wird die Verarbeitungsgeschwindigkeit des programmgesteuerten Geräts gesteigert.

Das Versetzen in den ausführbaren Zustand kann beispielsweise durch Setzen eines auf den zum Herstellen der Betriebsbereitschaft des programmgesteuerten Geräts heranzuziehenden Datensatz weisenden Zeigers auf den jeweiligen Datensatz erfolgen. Dabei ist die Gefahr, dass der Speicher aufgrund einer Unterbrechung unbrauchbar wird, auf die extrem kurze Zeitspanne des Umdefinierens des Zeigers verkürzt.

Zwischen dem ausführbaren und dem nicht ausführbaren Zustand lässt sich aber auch mit Hilfe eines Integritätsprüfwertes unterscheiden, der für einen Datensatz, nachdem dieser korrekt geladen wurde, berechnet und gespeichert wird. Ein solcher Integritätsprüfwert kann insbesondere eine Prüfsumme, ein Paritätsbit oder dergleichen sein. Fehler in dem Datensatz kann dann erkannt werden, indem jeweils vor dem Zugriff auf den Datensatz der Integritätsprüfwert von neuem berechnet und mit dem gespeicherten Wert verglichen wird. Stimmen beide überein, so ist der Datensatz ausführbar, anderenfalls nicht. Um einen Datensatz als nicht ausführbar zu kennzeichnen, genügt es also, seinen Integritätsprüfwert zu verändern.

Wichtig ist, dass immer dann, wenn ein Datensatz in den nicht ausführbaren Zustand versetzt wird, für das programmgesteuerte Gerät feststeht, wo ein statt dessen ausführbarer Datensatz zu finden ist. Vorzugsweise ist die Adresse eines solchen alternativ ausführbaren Datensatzes fest vorgegeben. Es kann dann zwar nicht mehr in Schritt b) ad hoc entschieden werden, wo der zweite Datensatz gespeichert werden soll, sondern er muss an die fest vorgegebene Adresse gespeichert werden; der Vorteil ist aber, dass die Adresse, an der der alternative Datensatz zu finden ist, fest im Gerät verdrahtet sein kann und nicht verloren gehen kann. Damit ist die Gefahr, dass nach einer unvorhergesehenen Unterbrechung des Datensatz-Ersetzungsverfahrens weder der erste noch der zweite Datensatz ausführbar ist, vollends ausgeräumt.

Besonders bevorzugt wird der erste Datensatz im Anschluss an Schritt (c) gelöscht, nachdem er in den nicht ausführbaren Zustand versetzt worden ist. Auf diese Weise wird weiterer, von dem nun nicht mehr benötigten ersten Datensatz beanspruchter Speicherplatz freigegeben.

Bei einer besonders bevorzugten Ausführung des Verfahrens umfasst der Speicher wenigstens zwei Speicherzonen, deren Inhalt unabhängig voneinander veränderbar ist, wobei der erste Datensatz in einer ersten der Zonen gespeichert ist und der zweite Datensatz im Schritt (b) in eine zweite der Zonen geladen wird, wobei in einem weiteren Schritt (d) des Anspruchs 3 der zweite Datensatz in einen zuvor von dem ersten Datensatz belegten Bereich der ersten Zone kopiert wird, und anschließend in einem Schritt (e) des Anspruchs 3 der zweite Datensatz in der zweiten Zone in einen nicht ausführbaren Zustand und der zweite Datensatz in der ersten Zone in einen ausführbaren Zustand versetzt wird. Bei dieser Ausführung ist gewährleistet, dass der zweite Datensatz nach Beendigung des Verfahrens in demselben Bereich der ersten Zone gespeichert ist, in dem sich der erste Datensatz zu Beginn des Verfahrens befunden hat. Dies ist insbesondere bei programmgesteuerten Geräten von Vorteil, bei denen die Zonen des Speichers aus unterschiedlichen Speicherbausteinen mit unterschiedlichen Zugriffszeiten bestehen und bei denen die Geschwindigkeit, mit der eine Routine ausgeführt wird, davon abhängt, in welcher Zone des Speichers sich die Programmanweisungen und/oder Parameter der Routine befinden.

Auch bei dieser Ausführung des Verfahrens ist es möglich, den zweiten Datensatz im zweiten Speicher nach Versetzen in den nicht aktiven Zustand im Schritt (e) zu löschen, um von dem nun nicht mehr benötigten zweiten Datensatz unnötig beanspruchten Speicherplatz freizugeben.

Auch in einer weiteren, besonders bevorzugten Ausführung des Verfahrens umfasst der Speicher wenigstens zwei solche Speicherzonen, wie sie soeben beschrieben wurden, wobei zwischen den Schritten (a) und (b), d.h. insbesondere vor dem Laden des zweiten Datensatzes, in einem Schritt (a1) des Anspruchs 5 der erste Datensatz in einen Bereich einer zweiten der Zonen kopiert wird, und in einem nachfolgenden Schritt (a2) des Anspruchs 5, jedoch vor dem Schritt (b), der erste Datensatz in der ersten Zone in einen nicht ausführbaren Zustand und der erste Datensatz in der zweiten Zone in einen ausführbaren Zustand versetzt wird, woraufhin im darauffolgenden Schritt (b) der zweite Datensatz in die erste Zone geladen wird.

Unter Verwendung des ersten oder zweiten Datensatzes ist es möglich, in dem Speicher abgelegte Anwendungsprogrammdaten für den Betrieb des programmgesteuerten Gerätes zu ändern. In einem solchen Fall wird vorteilhaft der Bereich des Speichers, in den der zweite Datensatz im Schritt (b) geladen wird bzw. der Bereich des Speichers, in den der erste Datensatz im Schritt (a1) kopiert wird, in einem von den Anwendungsprogrammdaten belegten Bereich des Speichers festgelegt. Auf diese Weise muss für das Verfahren im Speicher kein zusätzlicher Speicherplatz freigehalten werden, und Speicherplatz, der zwar bereits belegt ist, aber nicht benötigt wird, etwa weil darin gespeicherte Anwendungsprogrammdaten ebenfalls zur Ersetzung vorgesehen sind, wird sinnvoll ausgenutzt.

Ganz besonders bevorzugt wird der jeweilige Datensatz erst dann in den ausführbaren Zustand versetzt, wenn eine Überprüfung desselben ergibt, dass er fehlerfrei ist. Bei dieser Überprüfung kann es sich beispielsweise um ein an sich bekanntes Prüfsummenverfahren handeln.

Das erfindungsgemäße programmgesteuerte Gerät kann einen Prozessor mit einer Schnittstelle zum Empfangen von Anwendungsprogrammdaten und/oder Datensätzen umfassen. Über diese Schnittstelle lassen sich die neuen Daten beispielsweise von einem externen Programmiergerät in den Speicher eingeben. Vor allem programmgesteuerte Geräte, die in Kraftfahrzeugen eingebaut sind, beispielsweise Steuereinheiten für Motoren, können mittels solcher Programmiergeräte in Werkstätten neu programmiert werden.

Ferner kann der Speicher des programmgesteuerten Geräts wenigstens einen Flash-Speicher oder ein EEPROM zum Speichern des Datensatzes und/oder von Anwendungsprogrammdaten umfassen. Flash-Speicher oder EEPROMs bilden dabei voneinander getrennte Speicherzonen des Speichers. Bei solchen programmgesteuerten Geräten erweist sich das erfindungsgemäße Verfahren als besonders vorteilhaft, weil diese Speicherzonen stets nur gänzlich überschreibbar sind und ein teilweises Überschreiben derselben nicht möglich ist. Sofern während des Überschreibvorganges solcher Speicherzonen eine Unterbrechung eintritt, wird deren gesamter Speicherinhalt geschädigt. Dank der Erfindung kann nun auch bei programmgesteuerten Geräten mit solchen Speichern der erste Datensatz durch einen zweiten Datensatz ersetzt werden, weil dabei stets in wenigstens einer der Speicherzonen ein funktionsfähiger Datensatz in ausführbarem Zustand vorliegt, während ein jeweiliger zweiter Datensatz in eine zweite dieser Speicherzonen geladen wird.

Bevorzugterweise ist das Gerät eine Steuereinheit, die eine Vorrichtung, insbesondere ein Kraftfahrzeug oder einen Teil eines Kraftfahrzeugs oder eine als Teil eines Kraftfahrzeugs verwendbare Vorrichtung wie etwa einen Motor, steuert. In einem solchen Fall wird das programmgesteuerte Gerät in der Regel mittels Programmiergeräten programmiert, wobei in den Programmiergeräten gespeicherte Daten wie Datensätze oder Anwendungsprogrammdaten mit Unterstützung des im Speicher des programmgesteuerten Geräts gespeicherten ersten Datensatzes jeweilige Daten im Speicher ersetzen. Sofern das programmgesteuerte Gerät Teil eines Kraftfahrzeuges ist, kann eine solche Datenersetzung im Speicher auch während eines Werkstattaufenthaltes erfolgen.

Die Erfindung wird im Folgenden anhand von Ausführungsbeispielen näher beschrieben. Die zugehörigen Figuren zeigen:
- Fig. 1: eine grundlegende erste Ausgestaltung des erfindungsgemäßen Verfahrens;
- Fig. 2: eine zweite Ausgestaltung des erfindungsgemäßen Verfahrens;
- Fig. 3: eine dritte Ausgestaltung des erfindungsgemäßen Verfahrens; und
- Fig. 4a und 4b: Erweiterungen der beschriebenen Ausgestaltungen des erfindungsgemäßen Verfahrens.

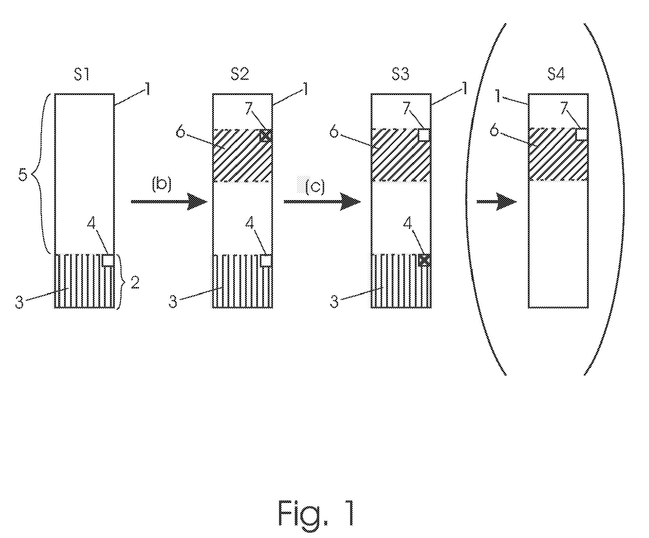

Eine grundlegende erste Ausgestaltung des erfindungsgemäßen Verfahrens ist in Fig. 1 zu sehen. In Fig. 1 sind vier verschiedene Situationen S1 bis S4 eines Speichers 1 in einem nicht gezeigten programmgesteuerten Gerät mit einem Prozessor während der Ausführung des Verfahrens gezeigt, wobei die Situation S4 optional und daher in Klammern gesetzt ist, und Pfeile zeigen Übergänge von einer der Situationen S1 bis S4 zur jeweils nächsten Situation S1 bis S4 an.

In der nach Herstellen der Betriebsbereitschaft des Geräts vorliegenden Situation S1 ist in einem Bereich 2 des Speichers 1 ein erster Datensatz 3 enthalten, welcher unter anderem zur Herstellung der Betriebsbereitschaft des programmgesteuerten Geräts sowie für eine Änderung von Daten in dem Speicher 1 benötigt wird, und der in Fig. 1 durch vertikale Schraffur symbolisiert ist. Eine quadratische Zustandsanzeige 4 bezeichnet symbolisch einen von zwei verschiedenen Zuständen, den der erste Datensatz 3 annehmen kann. Bei diesen Zuständen handelt es sich um einen ausführbaren Zustand einerseits und um einen nicht ausführbaren Zustand andererseits.

Zwischen dem ausführbaren und dem nicht ausführbaren Zustand des Datensatzes 3 wird mittels einer Prüfverknüpfung unterschieden. Die Prüfverknüpfung wird einmalig gebildet, indem von wenigstens zwei Datenwerten, die an vorab festgelegten Adressen des Datensatzes gespeichert sind, eine Verknüpfung wie etwa eine Summe, ein Modulo-Produkt, eine logische Verknüpfung oder eine Verkettung solcher Operationen berechnet wird, die zu einem eindeutigen Ergebniswert führt, und das Ergebnis, der Integritätsprüfwert, an einem vorgegebenen Speicherplatz abgelegt wird. Um die Ausführbarkeit des Datensatzes zu prüfen, wird dieselbe Verknüpfung erneut gebildet und ihr Ergebnis mit dem gespeicherten Integritätsprüfwert verglichen. Bei Übereinstimmung wird der Datensatz als ausführbar, anderenfalls als nicht ausführbar beurteilt.

Der Datensatz 3 wird, ohne ihn zu beschädigen, in den nicht ausführbaren Zustand versetzt durch Verändern des gespeicherten Integritätsprüfwerts.

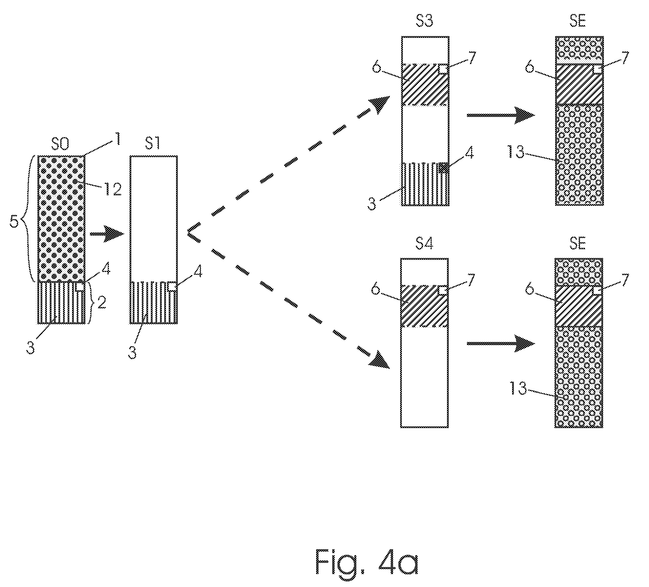

Im vorliegenden Fall der Situation S1 befindet sich der erste Datensatz 3 im ausführbaren Zustand, der durch ein leeres Quadrat der Zustandsanzeige 4 symbolisiert ist. Ein restlicher Bereich 5 des Speichers 1 kann ganz oder teilweise mit Anwendungsprogrammdaten angefüllt sein oder aber vollständig leer sein. Vorliegend wird zunächst von einem leeren Bereich 5 ausgegangen, wobei auf den Fall eines angefüllten Bereiches 5 im Zusammenhang mit Fig. 4a eingegangen wird.

In der Situation S1 hat das programmgesteuerte Gerät unter Verwendung des ersten Datensatzes 3 die Betriebsbereitschaft erreicht, d.h. es ist ohne Weiteres in der Lage, ein Anwendungsprogramm auszuführen. Beim Übergang von der Situation S1 zur Situation S2 wird ein in der Fig. 1 durch schräge Schraffur symbolisierter zweiter Datensatz 6 unter Verwendung des ersten Datensatzes 3 in den Bereich 5 des Speichers 1 geladen. Der zweite Datensatz 6 befindet sich in der Situation S2 in einem nicht ausführbaren Zustand. Dieser Zustand bleibt so lange bestehen, wie nicht der Integritätsprüfwert für den zweiten Datensatz erstmalig berechnet und an dem dafür vorgesehenen Speicherplatz abgelegt wird. Dies wird durch die Zustandsanzeige 7 in Form eines durchkreuzten Quadrats symbolisiert. Somit liegen in der Situation S2 zwei verschiedene Datensätze 3, 6 gleichzeitig im Speicher 1 vor, wobei sich der erste Datensatz 3 unverändert im ausführbaren Zustand befindet, während der zweite Datensatz 6 einen nicht ausführbaren Zustand einnimmt.

Der zweite Datensatz 6 ist dabei derart programmiert, dass für Sprünge und Zugriffe innerhalb des Datensatzes 6 nur relative Adressen verwendet werden, die auf eine Referenzadresse bezogen sind. Die Referenzadresse ist je nach Bereich des Speichers 1, in den der zweite Datensatz 6 geladen wird, bestimmt, im vorliegenden Fall also durch den Bereich 5. Diese Art der Programmierung erlaubt es, den zweiten Datensatz in einen beliebigen Bereich des Speichers zu kopieren und ihn dort auszuführen, ohne dass dafür Adressen angepasst werden müssten.

Beim folgenden Übergang von der Situation S2 zur Situation S3 wird der zweite Datensatz 6 durch Berechnen und Speichern seines Integritätsprüfwertes in den ausführbaren Zustand versetzt, so dass dessen Zustandsanzeige 7 in der Fig. 1 nunmehr ein leeres Quadrat ist, während der erste Datensatz 3 durch Verändern seines Integritätsprüfwertes in den nicht ausführbaren Zustand versetzt wird, so dass dessen Zustandsanzeige 4 in der Situation S3 mit einem Kreuz versehen ist. Die Berechnung des Integritätswertes des zweiten Datensatzes 6 erfolgt vor der Änderung des Integritätsprüfwertes des ersten Datensatzes 3, so dass zeitweilig beide Datensätze 3, 6 im ausführbaren Zustand befinden. Es gibt keinen Zeitpunkt, an dem kein Datensatz ausführbar ist.

Mit Erreichen der Situation S3 liegt statt dem ersten Datensatz 3 der zweite Datensatz 6 im ausführbaren Zustand vor und kann für eine Änderung von Daten im Speicher 1 oder für einen Neustart des Gerätes verwendet werden.

Um den Speicher 1 nicht mit alten und nicht mehr benötigten Daten zu belasten, kann der erste Datensatz 3 zum Abschluss des Verfahrens gelöscht werden, was zur Situation S4 führt, bei der im Speicher 1 nur noch der zweite Datensatz 6 im ausführbaren Zustand enthalten ist. Weil der Übergang von der Situation S3 zur Situation S4 optional ist, ist die Situation S4 in der Fig. 1 in Klammern gesetzt. Sofern der nicht mehr benötigte erste Datensatz 3 nicht sofort im Anschluss an das Verfahren gelöscht wird, kann er auch später während des Betriebs des Speichers einfach von anderen Daten überschrieben werden.

Sollte es beim Übergang zwischen der Situation S2 zur Situation S3 zu einem Fehler kommen, bei dem das programmgesteuerte Gerät seine Betriebsbereitschaft verliert, so liest der Prozessor zur Wiederherstellung der Betriebsbereitschaft des programmgesteuerten Geräts zunächst die an einem fest vorgegebenen Speicherplatz nicht umprogrammierbar gespeicherte Anfangsadresse des Datensatzes 3 und prüft dessen Integrität. Wenn die Integritätsprüfung erfolgreich ist, stellt er die Betriebsbereitschaft anhand des Datensatzes 3 her.

Wenn die Unterbrechung zu einem Zeitpunkt stattgefunden hat, an dem der Integritätsprüfwert des Datensatzes 3 bereits verändert war, scheitert dessen Integritätsprüfung, und er wird als nicht ausführbar erkannt. In diesem Fall liest der Prozessor die ebenfalls an einem fest vorgegebenen Speicherplatz nicht umprogrammierbar gespeicherte Anfangsadresse des Datensatzes 6 und berechnet dessen Integritätsprüfwert. Da jederzeit wenigstens einer der Datensätze 3, 6 ausführbar ist, gelingt hier die Integritätsprüfung, und die Betriebsbereitschaft wird anhand des Datensatzes 6 wieder hergestellt.

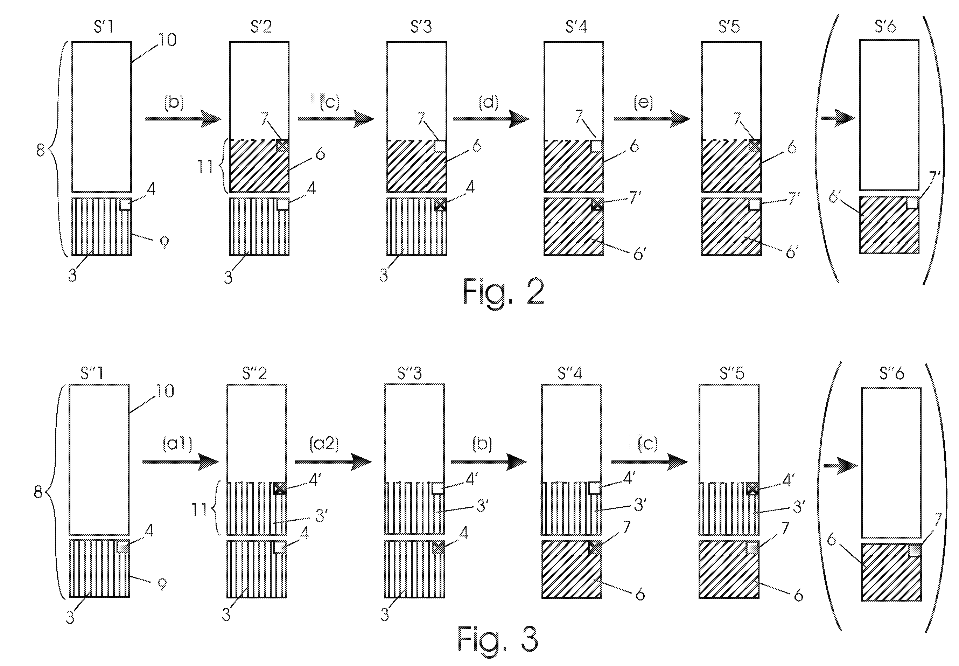

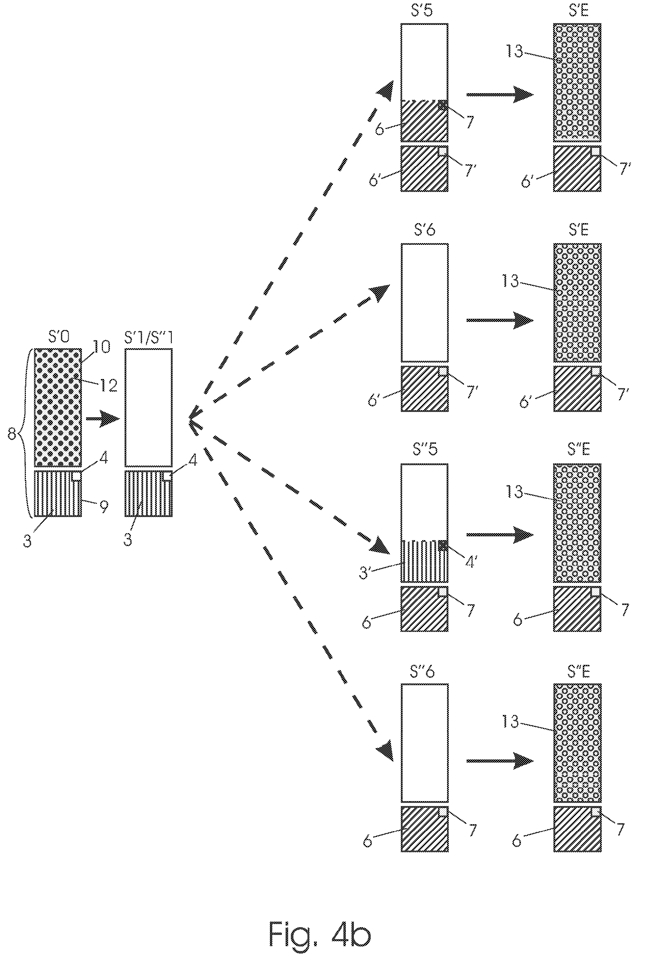

Bei der in Fig. 2 gezeigten Ausführung des erfindungsgemäßen Verfahrens umfasst der Speicher 8 zwei Flash-Speicher, von denen ein erster Flash-Speicher eine erste Speicherzone 9 und ein zweiter Flash-Speicher eine zweite Speicherzone 10 bildet. In der nach Herstellung der Betriebsbereitschaft des programmgesteuerten Geräts vorliegenden Situation S'1 ist der erste Datensatz 3 in der ersten Speicherzone 9 gespeichert und befindet sich im ausführbaren Zustand, gekennzeichnet durch die leere Zustandsanzeige 4. In der zweiten Speicherzone 10 können Anwendungsprogrammdaten enthalten sein, welche die gesamte Speicherzone 10 ausfüllen können, doch wird der Einfachheit halber auch hier zunächst von einer leeren Speicherzone 10 ausgegangen, während der Fall der vollen Speicherzone 10 in Fig. 4b behandelt wird.

Bei einem Übergang von der Situation S'1 zur Situation S'2 wird der zweite Datensatz 6 unter Verwendung des ersten Datensatzes in die zweite Speicherzone 10 geladen und nimmt dort einen Bereich 11 ein, wobei er sich in einem nicht ausführbaren Zustand befindet, gekennzeichnet durch eine durchkreuzte Zustandsanzeige 7. Beim Übergang zur Situation S'3 wird der zweite Datensatz 6 in den ausführbaren Zustand versetzt und der erste Datensatz 3 in den nicht ausführbaren Zustand. Analog dem vorherigen Beispiel wird dabei zuerst der zweite Datensatz 6 in den ausführbaren Zustand versetzt, bevor der erste Datensatz 3 in den nicht ausführbaren Zustand versetzt wird, so dass sich in der Zeit dazwischen beide Datensätze 3, 6 im ausführbaren Zustand befinden.

Beim darauffolgenden Übergang zur Situation S'4 wird der in der zweiten Speicherzone 10 befindliche zweite Datensatz 6 in die erste Speicherzone 9 kopiert, und der darin befindliche erste Datensatz 3 wird dabei überschrieben. Somit liegt in der Situation S'4 der zweite Datensatz 6 in der zweiten Speicherzone 10 im ausführbaren Zustand vor, während in der ersten Speicherzone 9 der kopierte zweite Datensatz 6' im nicht ausführbaren Zustand ist, was durch eine durchkreuzte Zustandsanzeige 7' des kopierten zweiten Datensatzes 6' angezeigt wird.

Sofern es während des Übergangs von der Situation S'2 zur Situation S'3 zu einem Fehler kommt, bei dem das programmgesteuerte Gerät seine Betriebsbereitschaft verliert, so sucht der Prozessor zur Wiederherstellung der Betriebsbereitschaft des programmgesteuerten Geräts zunächst in der ersten Speicherzone 9 nach einem Datensatz 3, 6 im ausführbaren Zustand. Weil der Zustand des zweiten Datensatzes 6 erst nach dem Zustand des ersten Datensatzes 3 geändert wird, findet er in der ersten Speicherzone 9 den sich im ausführbaren Zustand befindlichen ersten Datensatz 3 und stellt mit ihm die Betriebsbereitschaft des programmgesteuerten Geräts wieder her.

Tritt dagegen ein solcher Fehler beim Übergang von der Situation S'3 zur Situation S'4 auf, so trifft der Prozessor beim Versuch der Wiederherstellung der Betriebsbereitschaft des programmgesteuerten Geräts in der ersten Speicherzone 9 den ersten Datensatz 3 im nicht ausführbaren Zustand an, mit dem er die Betriebsbereitschaft des programmgesteuerten Geräts auch nicht wieder herstellen kann. Der Prozessor ist für einen solchen Fall eingerichtet, im Bereich 11 nach einem Datensatz im ausführbaren Zustand zu suchen, zu welchem er durch einen Zeiger verwiesen wird. Im Bereich 11 findet der Prozessor im vorliegenden Fall den zweiten Datensatz 6, der sich im ausführbaren Zustand befindet. Mit ihm stellt der Prozessor dann die Betriebsbereitschaft des programmgesteuerten Geräts wieder her.

Im darauffolgenden Übergang zur Situation S'5 wird der kopierte zweite Datensatz 6' in den ausführbaren Zustand versetzt und der zweite Datensatz 6 in den nicht ausführbaren Zustand. Optional kann daraufhin der zweite Datensatz 6 in der zweiten Speicherzone 10 gelöscht werden, was zu der in der Figur in Klammern gesetzten Situation S'6 führt, so dass mit Abschluss des Verfahrens lediglich der kopierte zweite Datensatz 6' in der ersten Speicherzone 9 vorliegt, der sich im ausführbaren Zustand befindet.

Bei dieser Ausführung des Verfahrens befindet sich bei Abschluss des Verfahrens der zweite Datensatz 6' in demselben Bereich der Speicherzone wie der erste Datensatz 3 in der Situation S1 zu Beginn des Verfahrens. Diese Ausgestaltung des Verfahrens bietet sich dann an, wenn es bei einem den Speicher 8 umfassenden programmgesteuerten Gerät für dessen Betrieb notwendig ist, dass sich der zur Herstellung von dessen Betriebsbereitschaft benötigte Datensatz 3, 6 in der ersten Speicherzone 9, befindet und die andere Speicherzone 10 zur Aufnahme von Anwendungsprogrammdaten frei bleibt.

Eine weitere Ausführung des erfindungsgemäßen Verfahrens zeigt die Fig. 3. Die Situation S"1 in der Fig. 3 ist identisch mit der Situation S'1 in der Fig. 2, denn es wird auch hier von einem Speicher 8 mit zwei Speicherzonen 9, 10 ausgegangen, wobei sich der erste Datensatz 3 im ausführbaren Zustand innerhalb der ersten Speicherzone 9 befindet. Vorliegend wird zunächst eine Kopie des ersten Datensatzes 3 erstellt und in einem Bereich 11 der zweiten Speicherzone 10 abgelegt. So wird die Situation S"2 erreicht, in welcher der erste Datensatz 3 ausführbar und der kopierte erste Datensatz 3' in der Speicherzone 10 nicht ausführbar ist, was durch eine durchkreuzte Zustandsanzeige 4' angezeigt wird. Beim darauffolgenden Übergang zur Situation S"3 wird der erste Datensatz 3 in den nicht ausführbaren Zustand und der kopierte erste Datensatz 3' in den ausführbaren Zustand versetzt.

Anschließend wird unter Verwendung des kopierten ersten Datensatzes 3' der zweite Datensatz 6 in die erste Speicherzone 9 geladen, wobei der erste Datensatz 3 überschrieben wird. Dies entspricht dem der Situation S"4. Der zweite Datensatz 6 ist hier zunächst im nicht ausführbaren Zustand, angezeigt durch eine durchkreuzte Zustandsanzeige 7. Durch Versetzen des zweiten Datensatzes 6 in den ausführbaren Zustand und des ersten Datensatzes in den nicht ausführbaren Zustand wird die Situation S"5 erreicht.

Optional kann auch hier zum Abschluss des Verfahrens der kopierte erste Datensatz 3' in der zweiten Speicherzone 10 gelöscht werden, so dass die Situation S"6 erreicht wird.

In den Figs. 4a und 4b schließlich sind die soeben beschriebenen Ausgestaltungen für Fälle skizziert, in denen vor Ausführung eines jeweiligen der Verfahren im Speicher 1 oder 8 erste Anwendungsprogrammdaten 12 gespeichert sind, die in den Figs. 4a und 4b durch ein schwarzes Tupfenmuster symbolisiert werden.

Fig. 4a stellt den Fall für die in Fig. 1 gezeigte Ausführung dar. Zu Beginn des Verfahrens liegt die Situation S0 vor, in welcher der Speicher 1 neben dem ersten Datensatz 3, der sich im ausführbaren Zustand befindet, erste Anwendungsprogrammdaten 12 gespeichert hat. Diese ersten Anwendungsprogrammdaten 12 werden gelöscht, bevor mit der Ausführung des Verfahrens begonnen wird. Nach Löschen der ersten Anwendungsprogrammdaten 12 liegt die Situation S1 vor, wie sie in der Fig. 1 gezeigt ist. Das Verfahren fährt wie in Verbindung mit Fig. 1 beschrieben fort, bis die Situation S3 oder optional die Situation S4 erreicht ist. Im Anschluss daran werden zweite Anwendungsprogrammdaten 13, symbolisiert durch ein Kreismuster, in den Speicher 1 geladen. Ausgehend von der Situation S3 wird dabei der erste Datensatz 3, der sich im nicht ausführbaren Zustand befindet, von den zweiten Anwendungsprogrammdaten 13 überschrieben, so dass diese nunmehr auch den zuvor von dem ersten Datensatz 3 eingenommenen Bereich 2 im Speicher 1 einnehmen. Weil in der Situation S4 der erste Datensatz 3 bereits gelöscht ist, können ausgehend von S4 die zweiten Anwendungsprogrammdaten 13 sofort in den Speicher 1 geladen werden. In beiden Fällen gelangt man jeweils zur selben Situation SE, in welcher der Speicher 1 den zweiten Datensatz 6 im ausführbaren Zustand sowie zweite Anwendungsprogrammdaten 13 gespeichert hat.

Für die in den Figs. 2 und 3 beschriebenen Ausgestaltungen verläuft das Verfahren entsprechend. Wie in Fig. 4b zu sehen ist, liegt nach Herstellung der Betriebsbereitschaft des programmgesteuerten Geräts bei allen diesen Ausführungen die Situation S'0 vor, bei welcher der erste Datensatz 3 im ausführbaren Zustand innerhalb der Speicherzone 9 gespeichert ist und erste Anwendungsprogrammdaten 12 in der zweiten Speicherzone 10 gespeichert sind. Bevor mit den in den Figs. 2 und 3 beschriebenen Ausgestaltungen fortgefahren wird, werden diese ersten Anwendungsprogrammdaten 12 gelöscht, so dass die jeweiligen anfänglichen Situationen S'1/S"1 der Fig. 2 bzw. 3 erreicht werden. Ausgehend von jeweiligen dieser Situationen S'1/S"1 werden die in den Figs. 2 und 3 beschriebenen Schritte ausgeführt, und man gelangt dabei je nach Ausführung des Verfahrens zu einer der Situationen S'5, S'6, S"5 oder S"6. Ausgehend von einer der Situationen S'5 oder S"5 werden zweite Anwendungsprogrammdaten 13 in die zweite Speicherzone 10 geladen, wobei der darin enthaltene zweite Datensatz 6 bzw. der erste Datensatz 3', die sich jeweils im nicht ausführbaren Zustand befinden, überschrieben werden. Von der Situation S'5 gelangt man zur Situation S'E und von der Situation S"5 zur Situation S"E. In der Situation S'E ist der zweite Datensatz 6' in der ersten Speicherzone 9 im ausführbaren Zustand gespeichert und die zweiten Anwendungsprogrammdaten 13 sind in der zweiten Speicherzone 10 gespeichert. In der Situation S"E ist der zweiten Datensatz 6 in der ersten Speicherzone 9 im ausführbaren Zustand gespeichert und die zweiten Anwendungsprogrammdaten 13 sind in der zweiten Speicherzone 10 gespeichert. Im Fall der Situationen S'6 oder S"6 werden die zweiten Anwendungsprogrammdaten 13 in die zweite Speicherzone 10 geladen, ohne dass dabei darin enthaltene Daten gelöscht werden müssten. Auch hier gelangt man in beiden Fällen jeweils wieder zu denselben Situationen S'E und S"E, und zwar von der Situation S'6 zur Situation S'E und von der Situation S"6 zur Situation S'E.

## Patentansprüche

1. Verfahren zum Ersetzen eines in einem Speicher (1, 8) eines programmgesteuerten Geräts gespeicherten, für die Herstellung der Betriebsbereitschaft des Geräts benötigten ersten Datensatzes (3) durch einen zweiten Datensatz (6, 6'), mit den Schritten
(a) Herstellen der Betriebsbereitschaft des Geräts mit dem ersten Datensatz (3);
(b) Laden des zweiten Datensatzes (6, 6') in einen von dem ersten Datensatz (3, 3') getrennten Bereich (2, 5, 11) des Speichers (1, 8);
(c) Versetzen des ersten Datensatzes (3, 3') in einen nicht ausführbaren Zustand und des zweiten Datensatzes (6, 6') in einen ausführbaren Zustand.

2. Verfahren nach Anspruch 1, **dadurch gekennzeichnet, dass** der erste Datensatz (3, 3') im Anschluss an Schritt (c) gelöscht wird.

3. Verfahren nach Anspruch 1 oder 2, **dadurch gekennzeichnet, dass** der Speicher (8) wenigstens zwei Speicherzonen (9, 10) umfasst, deren Inhalt unabhängig voneinander veränderbar ist, wobei der erste Datensatz (3, 3') in einer ersten der Zonen (9, 10) gespeichert ist und der zweite Datensatz (6, 6') im Schritt (b) in eine zweite der Zonen (9, 10) geladen wird, mit den weiteren Schritten:
(d) Kopieren des zweiten Datensatzes (6) in einen zuvor von dem ersten Datensatz (3) belegten Bereich der ersten Zone (9);
(e) Versetzen des zweiten Datensatzes (6) in der zweiten Zone (10) in einen nicht ausführbaren Zustand und des zweiten Datensatzes (6') in der ersten Zone (9) in einen ausführbaren Zustand.

4. Verfahren nach Anspruch 3, **dadurch gekennzeichnet, dass** der zweite Datensatz (6) in der zweiten Zone (10) in Schritt (e) gelöscht wird.

5. Verfahren nach Anspruch 1 oder 2, **dadurch gekennzeichnet, dass** der Speicher (8) wenigstens zwei Speicherzonen (9, 10) umfasst, deren Inhalt unabhängig voneinander veränderbar ist, wobei der erste Datensatz (3) in einer ersten der Zonen (9, 10) gespeichert ist, und wobei zwischen den Schritten (a) und (b) die folgenden weiteren Schritte ausgeführt werden:
(a1) Kopieren des ersten Datensatzes (3) in einen Bereich (11) einer zweiten der Zonen (10);
(a2) Versetzen des ersten Datensatzes (3) in der ersten Zone (9) in einen nicht ausführbaren Zustand und des ersten Datensatzes (3') in der zweiten Zone (10) in einen ausführbaren Zustand;
woraufhin im nachfolgenden Schritt (b) der zweite Datensatz (6) in die erste Zone (9) geladen wird.

6. Verfahren nach einem der vorhergehenden Ansprüche, **dadurch gekennzeichnet, dass** in dem Speicher (1, 8) abgelegte Anwendungsprogrammdaten (12) für den Betrieb des programmgesteuerten Geräts unter Verwendung des ersten oder zweiten Datensatzes (3, 3', 6, 6') geändert werden.

7. Verfahren nach Anspruch 6, **dadurch gekennzeichnet, dass** der Bereich des Speichers (2, 5, 11), in den der zweite Datensatz (6) im Schritt (b) geladen wird bzw. der Bereich (11) des Speichers, in den der erste Datensatz (3) im Schritt (a1) kopiert wird, in einem von den Anwendungsprogrammdaten belegten Bereich (5, 11) des Speichers (1, 8) festgelegt wird.

8. Verfahren nach einem der vorhergehenden Ansprüche, **dadurch gekennzeichnet, dass** der jeweilige Datensatz (3, 3', 6, 6') erst dann in den ausführbaren Zustand versetzt wird, wenn eine Überprüfung desselben ergibt, dass er fehlerfrei ist.

9. Verfahren nach einem der vorhergehenden Ansprüche, **dadurch gekennzeichnet, dass** zum Versetzen eines Datensatzes in den ausführbaren Zustand ein Integritätsprüfwert aus dem Datensatz berechnet und gespeichert wird, und dass bei einer Prüfung des Datensatzes auf Ausführbarkeit der Integritätsprüfwert aus dem Datensatz erneut berechnet und mit dem gespeicherten Wert verglichen wird, und dass der Datensatz nur dann als ausführbar beurteilt wird, wenn beide Integritätsprüfwerte übereinstimmen.

10. Verfahren nach Anspruch 9, **dadurch gekennzeichnet, dass** zum Versetzen eines Datensatzes in den nicht ausführbaren Zustand dessen gespeicherter Integritätsprüfwert verändert wird.

11. Verfahren nach einem der vorhergehenden Ansprüche, **dadurch gekennzeichnet, dass**, falls ein Datensatz als nicht ausführbar beurteilt wird, ein statt dessen ausführbarer Datensatz an einer fest vorgegebenen Adresse des Speichers (1, 8) gesucht wird.

12. Programmgesteuertes Gerät mit einem Speicher (1, 8), insbesondere einem Speicher (1, 8) zur Ausführung eines Verfahrens nach einem der vorhergehenden Ansprüche, in dem ein erster Datensatz (3) in einem ausführbaren Zustand gespeichert ist, in dem er an der Herstellung des Betriebsbereitschaft des Geräts beteiligt ist, **dadurch gekennzeichnet, dass** der erste Datensatz (3) in einen nicht ausführbaren Zustand versetzbar ist, in dem er an der Herstellung der Betriebsbereitschaft des Geräts unbeteiligt ist, und dass das Gerät ferner eingerichtet ist, einen zweiten Datensatz (6) einzulesen, im Speicher (1, 8) zu speichern und in den ausführbaren Zustand zu versetzen.

13. Gerät nach Anspruch 12, **gekennzeichnet durch** einen Prozessor mit einer Schnittstelle zum Empfangen von Datensätzen (3, 6) und/oder Anwendungsprogrammdaten (13).

14. Gerät nach Anspruch 12 oder 13, **dadurch gekennzeichnet, dass** der Speicher (1, 8) wenigstens einen Flash-Speicher (9, 10) umfasst.

15. Gerät nach einem der Ansprüche 12 bis 14, **dadurch gekennzeichnet, dass** das Gerät eine Steuereinheit ist, die eine Vorrichtung, insbesondere ein Kraftfahrzeug oder einen Teil eines Kraftfahrzeugs oder eine als Teil eines Kraftfahrzeugs verwendbare Vorrichtung wie etwa einen Motor, steuert.
